(19) Europäisches Patentamt
European Patent Office
Office européen des brevets

(11) **EP 3 346 583 A1**

(12) **EUROPEAN PATENT APPLICATION**

(43) Date of publication:
**11.07.2018 Bulletin 2018/28**

(51) Int Cl.:
***H02K 1/27*** *(2006.01)* ***H02K 29/03*** *(2006.01)*

(21) Application number: **17163081.7**

(22) Date of filing: **27.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.01.2017 TW 106100204**

(71) Applicant: **Chicony Power Technology Co., Ltd.
241 New Taipei City (TW)**

(72) Inventors:
• **HUNG, Shih-Wei
241 New Taipei City (TW)**
• **LUO, Yin-Jao
241 New Taipei City (TW)**
• **YUAN, Shao-Chung
241 New Taipei City (TW)**

(74) Representative: **Cabinet Beaumont
4, Place Robert Schuman
B.P. 1529
38025 Grenoble Cedex 1 (FR)**

Remarks:
Amended claims in accordance with Rule 137(2) EPC.

(54) **MOTOR ROTOR AND METHOD FOR FORMING THE SAME**

(57) A motor rotor includes a body and at least one magnet. The body has an even number of protrusions. The outer contour of the cross-sections of the protrusions conforms to at least a portion of the periphery of the relation: $r = k \times \sin((n/d) \times \theta)$, where k is related to the maximum distance between the outer contour of the cross-sections of the protrusions and the center of the body, n is related to the number of protrusions, and d is related to the curvature of the outer contour. The magnet is disposed in the body.

Fig. 3

EP 3 346 583 A1

## Description

## BACKGROUND

Technical Field

The present disclosure relates to a motor rotor and a method for forming the same.

Description of Related Art

A motor is an electric machine designed to convert electrical energy into mechanical energy, and then kinetic energy is generated from the mechanical energy, thereby driving another device. Most of electric motors generate energy through magnetic fields and coil current in each of the motors.

The motor includes a stator and a rotor. If the rotational speed of the rotor is the same as the frequency of the supplied alternating current, it is called a synchronous motor. The rotor of the synchronous motor may include an electromagnet or a permanent magnet. The synchronous motor including the permanent magnet is called a permanent magnet synchronous motor. The magnetic field generated by the stator of the synchronous motor attracts the pole of the rotor generating the magnetic field with the opposite direction. Since the magnetic field generated by the stator rotates at a certain speed, the rotor rotates at the same speed with the rotation speed of the magnetic field generated by the stator.

To further improve the characteristics of motors, persons in the industry have made every endeavor to develop new solutions. How to develop motors with better characteristics has become one of the most important research topics.

## SUMMARY

This disclosure provides a motor rotor and a method for forming the same to reduce the harmonic components with second order or with an order more than second order in magnetic flux density distribution in the corresponding airgap and simplify the design process.

In one aspect of the disclosure, a motor rotor is provided. A motor rotor includes a body and at least one magnet. The body has an even number of protrusions. The outer contour of the cross-sections of the protrusions conforms to at least a portion of the periphery of the relation:

$$r = k \times \sin\left((n/d) \times \theta\right),$$

where k is related to the maximum distance between the outer contour of the cross-sections of the protrusions and the center of the body; n is related to the number of protrusions; and d is related to the curvature of the outer contour. The magnet is disposed in the body.

In one or more embodiments, the outer contour of the cross-sections of the protrusions conforms to the entire periphery of the relation.

In one or more embodiments, the body further has an even number of connecting portions disposed between the protrusions, and an outer contour of cross-sections of the connecting portions does not conform to the periphery of the relation.

In one or more embodiments, when n is an even number, d is an odd number; and when n is an odd number, d is an even number.

In one or more embodiments, n/d is not an integer.

In one or more embodiments, a number of the magnets is an even number.

In one or more embodiments, the magnet is a permanent magnet.

In another aspect of the disclosure, a method for forming a motor rotor is provided. The method includes the following steps: providing a relation:

$$r = k \times \sin\left((n/d) \times \theta\right),$$

where $(r, \theta)$ is radial and angular coordinates of a polar coordinate system, k, n, and d are adjustable parameters, in which k represents a maximum distance between a periphery of the relation and the origin of the polar coordinate system, n corresponds to a number of at least one protruding portion of the periphery of the relation, d corresponds to a curvature of the protruding portion of the periphery of the relation, n is a natural number, and d is a natural number; determining k, n, and d, thereby generating a first curve; and making an outer contour of cross-sections of an even number of protrusions of a body of a first motor rotor conform to at least a portion of a periphery of the first curve.

In one or more embodiments, in the step of determining k, n, and d, n corresponds to a number of the protrusions of the body of the first motor rotor.

In one or more embodiments, the method further includes the following steps: changing a value of k, thereby generating a second curve is generated; and making an outer contour of cross-sections of an even number of protrusions of a body of a second motor rotor conform to at least a part of a periphery of the second curve.

When the motor rotor is used, the magnet generates magnetic fields in the airgap between the motor rotor and the outer stator, such that the corresponding magnetic flux density distribution is generated in the airgap. Theoretically, the magnetic flux density distribution is sinusoidal, so that the induced electromotive force is sinusoidal as well. However, in the real situation, the magnetic flux density distribution often includes first order harmonics and harmonics with second order or with an order more than second order, so that the induced electromotive force includes first order harmonics and harmonics with second order or with an order more than second order as well. When the induced electromotive force includes harmonics with second order or with an order more than second order, vibrations and other unacceptable effects in certain motor applications may happen. Since the relation is a rose curve, the shape of the airgap varies sinusoidally by making the outer contour of the cross-sections of an even number of the protrusions of the body of the motor rotor conform to at least a portion of the periphery of the curve. The experiments show that the harmonic components with second order or with an order more than second order in magnetic flux density distribution can be effectively reduced.

Further, since the outer contour of the cross-sections of an even number of the protrusions of the body of the motor rotor conforms to at least a portion of the periphery of the curve, the shape of the outer contour of the cross-sections of all of the protrusions can be obtained immediately after k, n, and d are determined. Therefore, during the design process of the shape of the motor rotor, it is not necessary to fine-tune the shape of each of the protrusions and then piece together the outer contours of the cross-sections of all of the protrusions to get the entire outer contour. Therefore, the time needed to design the motor rotor can be effectively reduced.

It is to be understood that both the foregoing general description and the following detailed description are by examples, and are intended to provide further explanation of the invention as claimed.

## BRIEF DESCRIPTION OF THE DRAWINGS

The invention can be more fully understood by reading the following detailed description of the embodiment, with reference made to the accompanying drawings as follows:

Fig. 1 is a flowchart of a method for forming a motor rotor according to one embodiment of this disclosure;

Fig. 2 is a schematic view showing a relation for protrusions of the motor rotor according to one embodiment of this disclosure;

Fig. 3 is a schematic cross-sectional view of the motor rotor according to one embodiment of this disclosure;

Fig. 4 is a diagram of magnetic flux density versus angle for corresponding airgaps of a conventional motor rotor and the motor rotor of Fig. 3;

Fig. 5 is a diagram of induced electromotive force versus operation time for the conventional motor rotor and the motor rotor of Fig. 3;

Fig. 6 is a diagram of component ratio of induced electromotive force versus harmonic order for the conventional motor rotor;

Fig. 7 is a diagram of component ratio of induced electromotive force versus harmonic order for the motor rotor of Fig. 3;

Fig. 8 is a flowchart of a method for forming a motor rotor according to another embodiment of this disclosure; and

Fig. 9 is a schematic cross-sectional view of the motor rotor according to another embodiment of this disclosure.

## DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically depicted in order to simplify the drawings.

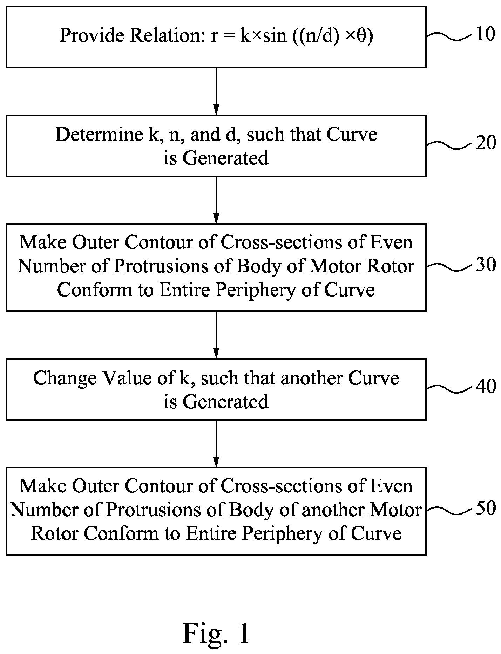

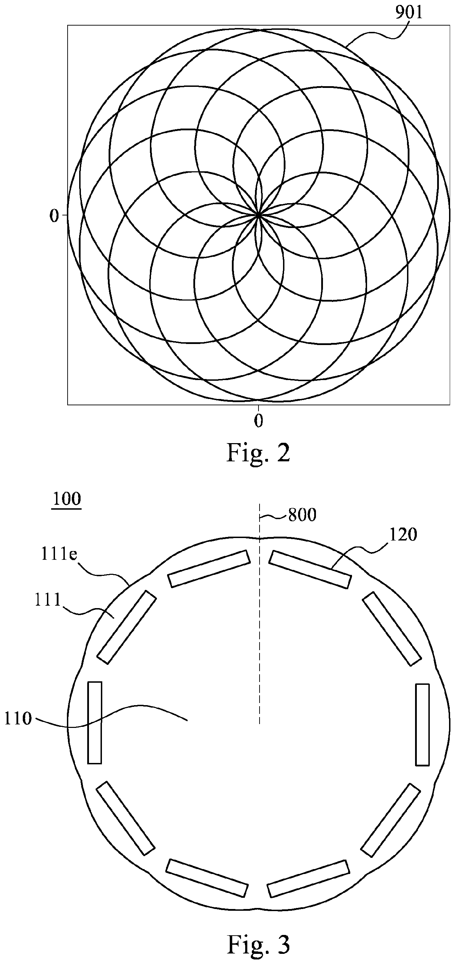

Fig. 1 is a flowchart of a method for forming a motor rotor 100 according to one embodiment of this disclosure. Fig. 2 is a schematic view showing a relation for protrusions of the motor rotor according to one embodiment of this disclosure. A method for forming motor rotor 100 is provided to simplify the design process of the motor rotor 100.

At first, as shown in Fig. 1 and Fig. 2, in step 10, a relation is provided:

$$r = k \times \sin \left( (n/d) \times \theta \right).$$

The relation is a rose curve, where $(r, \theta)$ is radial and angular coordinates of the polar coordinate system. k, n, and d are adjustable parameters. k is the maximum distance between a periphery of the relation and the origin of the polar coordinate system. n corresponds to the number of at least one protruding portion of the periphery of the relation. d corresponds to the curvature of the protruding portion of the periphery of the relation. n is a natural number. d is a natural number.

In general, the number of the protruding portions of the periphery of the relation is 2n. For example, in this embodiment, n is 5, and the number of the protruding portions of the periphery of the relation is 10.

In step 20, k, n, and d are determined, such that a curve 901 is generated.

Fig. 3 is a schematic cross-sectional view of the motor rotor 100 according to one embodiment of this disclosure. As shown in Fig. 1, Fig. 2, and Fig. 3, in step 30, an outer contour 111 e of cross-sections of an even number of protrusions 111 of a body 110 of the motor rotor 100 are made to conform to the entire periphery of the curve 901.

The motor rotor 100 includes at least one magnet 120. The magnet 120 is disposed in the body 110. When the motor rotor 100 is used, the magnet 120 generates magnetic fields in the airgap between the motor rotor 100 and the outer stator, such that the corresponding magnetic flux density distribution is generated in the airgap. Theoretically, the magnetic flux density distribution is sinusoidal, so the induced electromotive force is sinusoidal as well. However, in the real situation, the magnetic flux density distribution often includes first order harmonics and harmonics with second order or with an order more than second order, so the induced electromotive force includes first order harmonics and harmonics with second order or with an order more than second order as well. When the induced electromotive force includes harmonics with second order or with an order more than second order, vibrations and other unacceptable effects in certain motor applications may happen. Since the relation is a rose curve, the shape of the airgap will be sinusoidal by making the outer contour 111 e of the cross-sections of the even number of the protrusions 111 of the body 110 of the motor rotor 100 conform to the entire periphery of the curve 901. The experiments show that the harmonic components with second order or with an order more than second order in magnetic flux density distribution can be effectively reduced.

Further, since the outer contour 111 e of the cross-sections of the even number of the protrusions 111 of the body 110 of the motor rotor 100 conforms to the entire periphery of the curve 901, the entire shape of the motor rotor 100 can be obtained immediately after k, n, and d are determined. Therefore, during the design process of the shape of the motor rotor 100, it is not necessary to fine-tune the shape of each of the protrusions 111 and then piece together the outer contours of the cross-sections of all of the protrusions 111 to get the whole outer contour. Therefore, the time needed to design the motor rotor 100 can be effectively reduced.

In the step of determining k, n, and d, n corresponds to the number of the protrusions 111. In most specific applications, the number of the protrusions 111 are known, so that the value of n can be immediately determined in these specific applications (the number of the protruding portions of the periphery of the relation is 2n). For example, in this embodiment, the number of the protrusions 111 is 10, so that the value of n can be immediately determined to be 5. Further, since the size of the motor rotor 100 is generally predetermined, the value of k can be immediately determined (k is the maximum distance between the periphery of the relation and the origin of the polar coordinate system). After k and n is determined, d can then be adjusted according the characteristics required for the motor rotor 100 in the particular field.

In the step of determining k, n, and d, since the relation is a single function with only three parameters, basically only d needs to be adjusted to get the desired outer contour 111 e of the cross-sections of the protrusions 111 with the aforementioned conditions. Therefore, the time needed to design the motor rotor 100 can be effectively reduced.

Because the magnet 120 has two poles, that is, N pole and S pole, the number of the protrusions 111 has to be an even number, such that the magnetic flux generated by the magnets 120 enters and leaves mainly through the protrusions 111. Based on the characteristics of the relation, n/d is not an integer, such that the number of the protrusions 111 is an even number (i.e., the number of protruding portions of the periphery of the relation is an even number).

When n is an even number, d is an odd number; and when n is an odd number, d is an even number. Therefore, the shape of the relation will conform to the desired shape design of the motor rotor 100. Embodiments of this disclosure are not limited thereto. The person having ordinary skill in the art can make proper modifications to the conditions of n and d depending on the actual application.

In step 40, the value of k is changed, such that another curve is generated (not shown in figures).

In step 50, an outer contour of cross-sections of an even number of protrusions of a body of another motor rotor (not shown in figures) is made to conform to the entire periphery of another curve.

During the design process of the motor, motor rotors with different sizes are often designed in a specific application (for example, the motors for the hair dryers). Because a motor rotor 100 is already formed in steps 10, 20, and 30, only the value of k in the relation needs to be changed, such that the shapes of the motor rotors with different sizes can be determined in a specific application.

As shown in Fig. 3, a motor rotor 100 is provided. The motor rotor 100 includes a body 110 and at least one magnet 120. The body 110 has an even number of protrusions 111. The outer contour of the cross-sections of the protrusions 111 conforms to at least a portion of the periphery of a relation:

$$r = k \times \sin ((n/d) \times \theta),$$

where k is related to the maximum distance between the outer contour of the cross-sections of the protrusions 111 and the center of the body 110, n is related to the number of protrusions 111, and d is related to the curvature of the outer contour 111 e. The magnet 120 is disposed in the body 110.

The shape of the outer contour 111 e conforms to the entire periphery of the relation. Embodiments of this disclosure are not limited thereto. The person having ordinary skill in the art can make proper modifications to the protrusions 111 depending on the actual application.

The number of the magnets 120 is an even number, and the magnets 120 are permanent magnets. Embodiments of this disclosure are not limited thereto. The person having ordinary skill in the art can make proper modifications to the magnets 120 depending on the actual application.

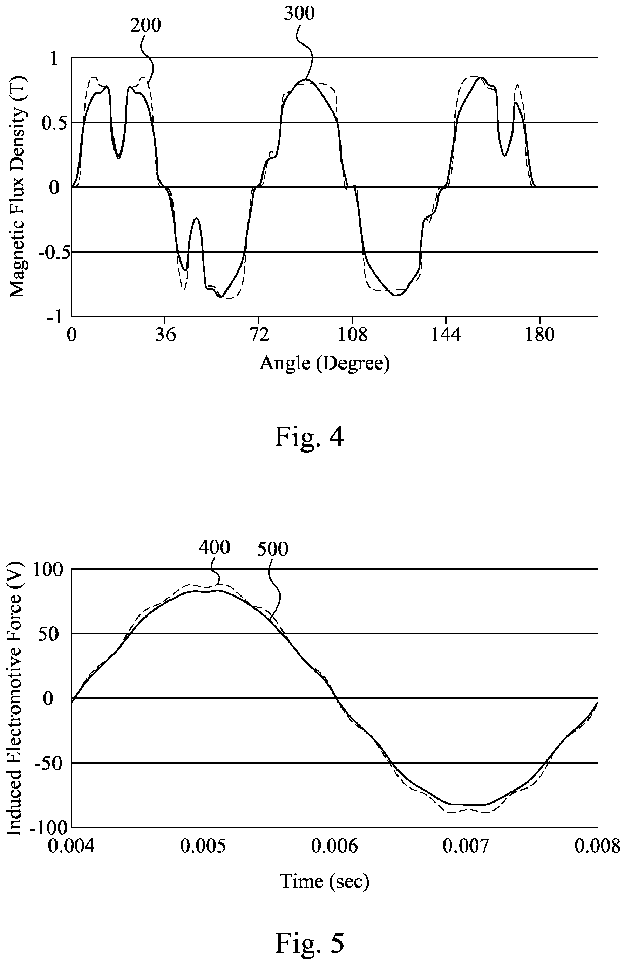

Fig. 4 is a diagram of magnetic flux density versus angle for corresponding airgap of a conventional motor rotor and the motor rotor 100 of Fig. 3. As shown in Fig. 4, a curve 200 represents the relation between the magnetic flux density and the angle of the corresponding airgap of the conventional motor rotor, and a curve 300 represents the relation between the magnetic flux density and the angle of the corresponding airgap of the motor rotor 100, in which the angle is defined between the reference line extending from the center of the motor rotor extending toward the twelve o'clock direction and the line connecting the measuring position and the center of the motor rotor (the angle is also called the mechanical angle). It can be seen from the curve 200 and the curve 300 that the magnetic flux density distribution of the corresponding airgap can be made closer to the sinusoidal form by using the motor rotor 100.

Fig. 5 is a diagram of induced electromotive force versus operation time for the conventional motor rotor and the motor rotor 100 of Fig. 3. As shown in Fig. 5, a curve 400 represents the relation between the induced electromotive force and the time of the conventional motor rotor, and a curve 500 represents the relation between the induced electromotive force and the time of the motor rotor 100. It can be seen from curve 400 and curve 500 that the induced electromotive force can be made closer to the sine function by using the motor rotor 100.

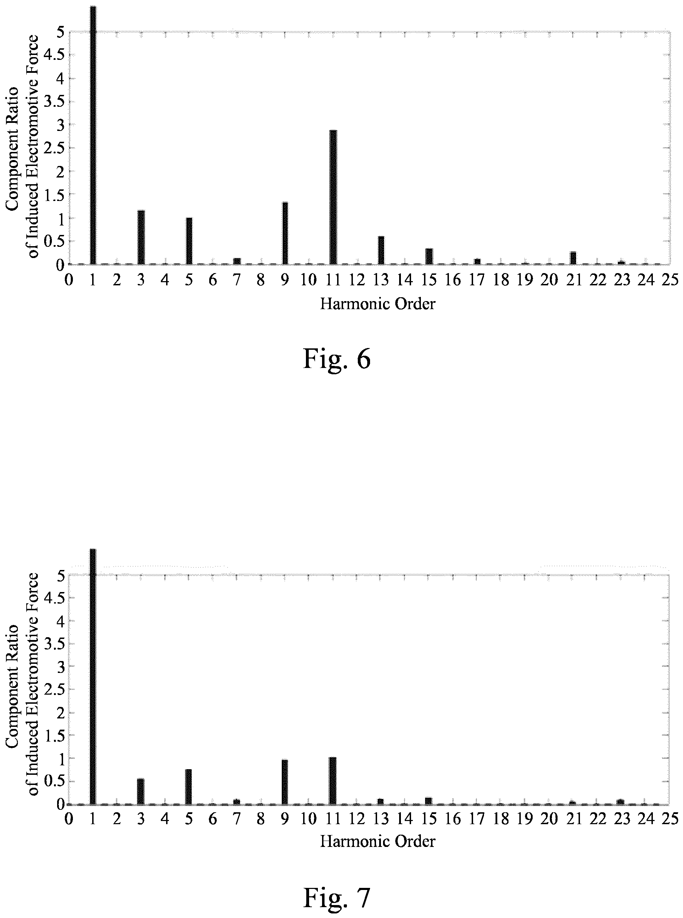

Fig. 6 is a diagram of component ratio of induced electromotive force versus harmonic order for the conventional motor rotor. Fig. 7 is a diagram of component ratio of induced electromotive force versus harmonic order for the motor rotor of Fig. 3. As shown in Fig. 6 and Fig. 7, the harmonic components with second order or with an order more than second order of induced electromotive force can be effectively reduced by using the motor rotor 100.

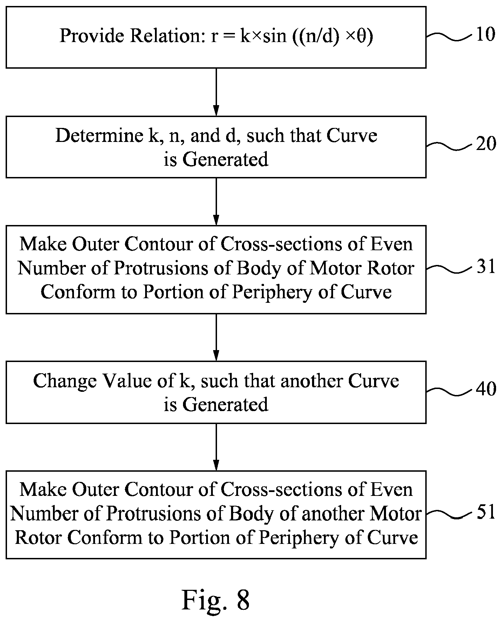

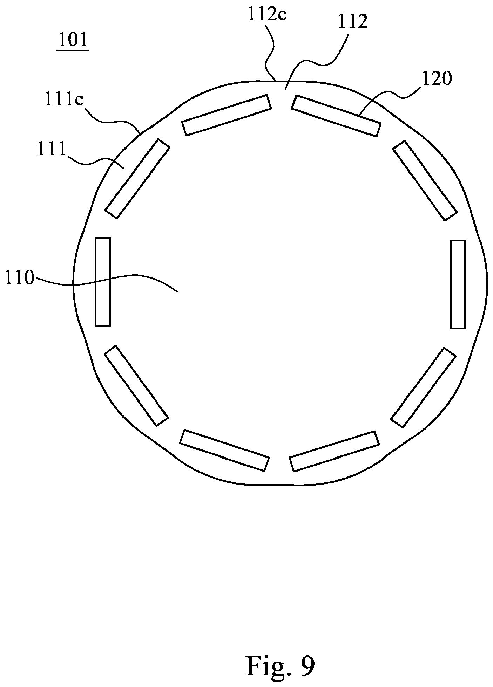

Fig. 8 is a flowchart of a method for forming the motor rotor 101 according to another embodiment of this disclosure. Fig. 9 is a schematic cross-sectional view of the motor rotor 101 according to another embodiment of this disclosure. The method for forming the motor rotor 101 of this embodiment is similar to the method for forming the motor rotor 100 of Fig. 1. The differences are mainly described below.

As shown in Fig. 8 and Fig. 9, after step 10 and step 20 are performed, step 31 is performed. In step 31, the outer contour of the cross-sections of an even number of the protrusions 111 of the body 110 of the motor rotor 101 is made to conform to a portion of the periphery of the curve 901 (see Fig. 2). The body 110 further has an even number of connecting portions 112 disposed between the protrusions 111, and an outer contour 112e of the cross-sections of the connecting portions 112 does not conform to the periphery of the relation.

The outer contour 112e of the cross-sections of the connecting portions 112 may be a straight line or a curve (as shown in Fig. 9, the outer contour 112e is a straight line). Embodiments of this disclosure are not limited thereto. The person having ordinary skill in the art can make proper modifications to the connecting portions 112 depending on the actual application.

The magnetic flux generated by the magnet 120 enters and leaves mainly through the protrusions 111. Then, even if the connecting portions 112 do not conform to the periphery of the relation, the magnetic flux density distribution in the airgap between the motor rotor 101 and the outer stator will not be substantially affected. Therefore, the shape of the outer contour 112e of the cross-sections of the connecting portions 112 can be designed in accordance with other considerations of the actual application.

After step 40 is performed, step 51 is performed. In step 51, the outer contour of the cross-sections of an even number of the protrusions of the body of another motor rotor is made to conform to a portion of the periphery of another curve, which is similar to step 31.

When the motor rotor 100 or 101 is used, the magnet 120 generates magnetic fields in the airgap between the motor rotor 100 or 101 and the outer stator, such that the corresponding magnetic flux density distribution is generated in the airgap. Theoretically, the magnetic flux density distribution is sinusoidal, so that the induced electromotive force is sinusoidal as well. However, in an actual situation, the magnetic flux density distribution often includes first order harmonics and harmonics with second order or with an order more than second order, so that the induced electromotive force includes first order harmonics and harmonics with second order or with an order more than second order as well. When the induced electromotive force includes harmonics with second order or with an order more than second order, vibrations and other unacceptable effects in certain motor applications may happen. Since the relation is a rose curve, the shape of the airgap will be sinusoidal by making the outer contour 111 e of the cross-sections of an even number of the protrusions 111 of the body 110 of the motor rotor 100 or 101 conform to at least a part of the periphery of the curve 901. The experiments show that the harmonic components with second order or with an order more than second order in magnetic flux density distribution can be effectively reduced.

Further, since the outer contour 111 e of the cross-sections of an even number of the protrusions 111 of the body 110 of the motor rotor 100 or 101 conforms to at least a part of the periphery of the curve 901, the shape of the outer contour 111 e of the cross-sections of all of the protrusions 111 can be obtained immediately after k, n, and d are determined. Therefore, during the design process of the shape of the motor rotor 100 or 101, it is not necessary to fine-tune the shape of each of the protrusions 111 and then piece together the outer contours 111 e of the cross-sections of all of the protrusions 111 to get the whole outer contour. Therefore, the time needed to design the motor rotor 100 can be effectively reduced.

**Claims**

1. A motor rotor (100), comprising:

    a body (110) having an even number of protrusions (111), wherein an outer contour (111 e) of cross-sections of the protrusions (111) conforms to at least a portion of a periphery of the relation:

    $$r = k \times \sin\left(\left(n/d\right) \times \theta\right),$$

    where k is related to a maximum distance between the outer contour (111 e) of the cross-sections of the protrusions (111) and a center of the body (110); n is related to a number of protrusions (111); and d is related to a curvature of the outer contour (111 e); and
    at least one magnet (120) disposed in the body (110).

2. The motor rotor (100) of claim 1, wherein the outer contour (111 e) of the cross-sections of the protrusions (111) conforms to the entire periphery of the relation.

3. The motor rotor (100) of claim 1, wherein the body (110) further has an even number of connecting portions (112) disposed between the protrusions (111), and an outer contour (112e) of cross-sections of the connecting portions (112) does not conform to the periphery of the relation.

4. The motor rotor (100) of claim 1, wherein when n is an even number, d is an odd number; and when n is an odd number, d is an even number.

5. The motor rotor (100) of claim 1, wherein n/d is not an integer.

6. The motor rotor (100) of claim 1, wherein a number of the magnets (120) is an even number.

7. The motor rotor (100) of claim 1, wherein the magnet (120) is a permanent magnet.

8. A method for forming a motor rotor (100), the method comprising:

    providing a relation:

    $$r = k \times \sin\left(\left(n/d\right) \times \theta\right),$$

    where (r, θ) is radial and angular coordinates of a polar coordinate system; k, n, and d are adjustable parameters, wherein k represents a maximum distance between a periphery of the relation and an origin of the polar coordinate system, n corresponds to a number of at least one protruding portion of the periphery of the relation, d corresponds to a curvature of the protruding portion of the periphery of the relation, n is a natural number, and d is a natural number; determining k, n, and d, thereby generating a first curve (901); and
    making an outer contour (111 e) of cross-sections of an even number of protrusions (111) of a body (110) of a first motor rotor (100) conform to at least a portion of a periphery of the first curve (901).

9. The method of claim 8, wherein in step of determining k, n, and d, n corresponds to a number of the protrusions of the body (110) of the first motor rotor (100).

10. The method of claim 8, further comprising:

    changing a value of k, thereby generating a second curve; and
    making an outer contour of cross-sections of an even number of protrusions of a body of a second motor rotor conform to at least a part of a periphery of the second curve.

**Amended claims in accordance with Rule 137(2) EPC.**

1. A motor rotor (100), comprising:
    a body (110) having an even and nonzero numbers of protrusions (111) and at least one magnet (120) disposed in the body (110), **characterized in that** an outer contour (111e) of cross-sections of the protrusions (111) conforms to at least a portion of a periphery of the curve corresponding to the relation:

    $$r = k \times \sin\left(\left(n/d\right) \times \theta\right),$$

    where (r, θ) is radial and angular coordinates of a polar coordinate system; k is a maximum distance between the outer contour (111e) of the cross-sections of the protrusions (111) and a center of the body (110); n is the number of protrusions (111); and d is related to a curvature of the outer contour (111e), and n/d is not an integer.

2. The motor rotor (100) of claim 1, wherein the outer contour (111e) of the cross-sections of the protrusions (111) conforms to the entire periphery of the curve corresponding to the relation.

3. The motor rotor (100) of claim 1, wherein the body (110) further has an even number of connecting portions (112) disposed between the protrusions (111), and an outer contour (112e) of cross-sections of the connecting portions (112) does not conform to the periphery of the curve corresponding to the relation.

4. The motor rotor (100) of claim 1, wherein when n is an even number, d is an odd number; and when n is an odd number, d is an even number.

5. The motor rotor (100) of claim 1, wherein n/d is not an integer.

6. The motor rotor (100) of claim 1, wherein a number of the magnets (120) is an even number.

7. The motor rotor (100) of claim 1, wherein the magnet (120) is a permanent magnet.

8. A method for forming a motor rotor (100), the method comprising providing at least one magnet (120) disposed in a body (110), and **characterized by** providing a relation:

$$r = k \times \sin((n/d) \times \theta),$$

where $(r, \theta)$ is radial and angular coordinates of a polar coordinate system; k, n, and d are adjustable parameters, k represents a maximum distance between a periphery of the curve corresponding to the relation and an origin of the polar coordinate system, n corresponds to a number of at least one protruding portion of the periphery of the curve corresponding to the relation, d corresponds to a curvature of the protruding portion of the periphery of the curve corresponding to the relation, n is a natural number, and d is a natural number; determining k, n, and d, thereby generating a first curve (901); and making an outer contour (111e) of cross-sections of an even number of protrusions (111) of the body (110) of a first motor rotor (100) conform to at least a portion of a periphery of the first curve (901).

9. The method of claim 8, wherein in step of determining k, n, and d, n corresponds to a number of the protrusions of the body (110) of the first motor rotor (100).

10. The method of claim 8, further comprising:

changing a value of k, thereby generating a second curve; and making an outer contour of cross-sections of an even number of protrusions of a body of a second motor rotor conform to at least a part of a periphery of the second curve.

Provide Relation: $r = k \times \sin((n/d) \times \theta)$ —~—10

Determine k, n, and d, such that Curve
is Generated —~—20

Make Outer Contour of Cross-sections of Even
Number of Protrusions of Body of Motor Rotor
Conform to Entire Periphery of Curve —~—30

Change Value of k, such that another Curve
is Generated —~—40

Make Outer Contour of Cross-sections of Even
Number of Protrusions of Body of another Motor
Rotor Conform to Entire Periphery of Curve —~—50

Fig. 1

901

0

0

Fig. 2

100

800

111e

120

111

110

Fig. 3

Fig. 4

Fig. 5

Fig. 6

Fig. 7

Provide Relation: r = k×sin ((n/d) ×θ) — 10

Determine k, n, and d, such that Curve is Generated — 20

Make Outer Contour of Cross-sections of Even Number of Protrusions of Body of Motor Rotor Conform to Portion of Periphery of Curve — 31

Change Value of k, such that another Curve is Generated — 40

Make Outer Contour of Cross-sections of Even Number of Protrusions of Body of another Motor Rotor Conform to Portion of Periphery of Curve — 51

Fig. 8

101

112e    112

120

111e

111

110

Fig. 9

Europäisches
Patentamt

European
Patent Office

Office européen
des brevets

# EUROPEAN SEARCH REPORT

Application Number

EP 17 16 3081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 955 714 A2 (ABB MOTORS OY [FI]) 10 November 1999 (1999-11-10) * paragraphs [0002], [0005], [0007], [0012]; figure 3 * | 1,2,4-10 | INV. H02K1/27 ADD. H02K29/03 |
| X | JP 2001 069701 A (MITSUBISHI HEAVY IND LTD) 16 March 2001 (2001-03-16) * paragraph [0018]; figure 2 * | 1,2,4-10 | |
| X | CN 101 944 787 A (SHANGHAI ELECTRIC DRIVE CO LTD) 12 January 2011 (2011-01-12) * paragraphs [0010] - [0011]; figure 2 * | 1,3-10 | |

TECHNICAL FIELDS
SEARCHED      (IPC)

H02K

The present search report has been drawn up for all claims

| Place of search | Date of completion of the search | Examiner |
|---|---|---|
| The Hague | 13 September 2017 | Georgopoulos, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                   
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 16 3081

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2017

| Patent document cited in search report | | Publication date | Patent family member(s) | | Publication date |
|---|---|---|---|---|---|
| EP 0955714 | A2 | 10-11-1999 | EP | 0955714 A2 | 10-11-1999 |
| | | | FI | 980980 A | 05-11-1999 |
| JP 2001069701 | A | 16-03-2001 | NONE | | |
| CN 101944787 | A | 12-01-2011 | NONE | | |

For more details about this annex : see Official Journal of the European Patent Office, No. 12/82